(19) Europäisches Patentamt

European Patent Office

Office européen des brevets

(11) Publication number: **0 221 726**
A2

# EUROPEAN PATENT APPLICATION

(21) Application number: 86308209.5

(22) Date of filing: 22.10.86

(51) Int. Cl.⁴: **B 32 B 27/32**

(30) Priority: 28.10.85 US 791961

(43) Date of publication of application:
13.05.87 Bulletin 87/20

(84) Designated Contracting States:
BE DE FR GB IT NL

(71) Applicant: **MOBIL OIL CORPORATION**
150 East 42nd Street
New York New York 10017 (US)

(72) Inventor: **Clauson, Melvil Bernard**
16 Huckleberry Road
Raymond New Hampshire 03077 (US)

Wagner, John Ralph, Jr.
300 Ashley Drive
Rochester New York 14620 (US)

(74) Representative: **Cooper, John Anthony et al**
Mobil Court 3 Clements Inn
London WC2A 2EB (GB)

(54) Laminar thermoplastic film having a heat sealable surface.

(57) A laminar oriented thermoplastic film substrate comprising a polyolefin layer having on at least one side thereof a layer comprising a very low density polyethylene or a blend of (I) a very low density polyethylene and (2) a polyolefin.

EP 0 221 726 A2

**Description**

## LAMINAR THERMOPLASTIC FILM HAVING A HEAT SEALABLE SURFACE

The present invention relates to a laminar oriented thermoplastic film structure characterized by having a base layer and a heat sealable skin layer.

In packaging applications using thermoplastic films. for example, polypropylene, it is usually necessary to seal the film during the packaging operation. This may be accomplished by using adhesives or by using heat sealing techniques. The particular sealing technique depends on the properties of the thermoplastic film, the packaging application, and the packaging technique being used.

The use of heat sealing techniques on oriented films may result in the loss of orientation in the vicinity of the heat seal. Heat sealed oriented films may, therefore, exhibit inferior and unacceptable film appearance and properties. In order to heat seal oriented films and obtain acceptable product properties, it may be necessary to apply to the oriented film a coating or laminar layer which has a melting point which is less than the orientation temperature of the oriented film. The application of the heat sealable laminar layer to the base oriented film may be accomplished utilizing various techniques including melt extrusion of the heat sealable layer onto a preformed oriented base web, employing adhesive material, or heat welding of the individual layers together. Preferred techniques are full extrusion of the individual layers followed by biaxial stretching of the multi-layer sheet so formed, or alternatively, extrusion coating of the heat sealable layer onto at least one surface of the longitudinally oriented substrate layer followed by stretching in the transverse direction.

In the past, coextruded oriented films have been prepared in which the oriented polypropylene core is coated with skin comprising ethylene-propylene random copolymer containing minor amounts of ethylene. Such laminar films exhibit high heat seal strength but because of the relatively high melting point of the copolymer skin, i.e. in the order of from 140°C (285°F) to 151°C (305°F), the temperature range over which usable heat seal may be formed is quite narrow, i.e., 5° to 11°C (10 to 20°F).

Similarly, in the past, coextruded oriented film have been prepared wherein the core in an oriented polypropylene and the skin layers are comprised of low density polyethylene which has been polymerized utilizing conventional free radical-catalyzed processes. In the case of such laminates, because of the lower melting point of the low density polyethylene skin resin than that of the hereinabove-described ethylene-propylene copolymer skins, a broader sealing range is achieved. However, the seal strength provided by a skin comprised of such polyethylene homopolymers, polymerized by a free radical-catalyzed process, are not as high as those provided by an ethylene-propylene random copolymer skin. Moreover, the haze and gloss values of such films are poorer than the haze and gloss values exhibited by oriented polypropylene film.

The art is ever on the lookout for improved heat seal layers for packaging films such as polypropylene.

The present invention provides a film laminate by the steps of bringing together, in face to face engagement, a base web of a polyolefin film and a heat seal film that at least includes some very low density polyethylene. In a preferred embodiment of the invention the structure is a laminar thermoplastic film, preferably oriented, comprising a substrate comprising a polyolefin layer having on at least one side thereof a layer comprising a very low density polyethylene or a blend of (1) a very low density polyethylene and (2) a polyolefin.

The polyolefins contemplated as the substrate or core material of the subject film structure include polyethylene, polypropylene, polybutene, etc. and copolymers and blends thereof. Particularly preferred is an isotactic polypropylene containing at least 80% by weight of isotactic polypropylene. It is preferred that the polypropylene have a melt flow of from 2 to 8 g/10 minutes. The polypropylene homopolymer can have a melting point range of from 160° to 169°C (321° to 336°F). A commercially available material of this description is ARCO W472, from ARCO Corporation.

The very low density polyethylene, or blend thereof, contemplated herein as the heat seal layer functions to give excellent ESM seals or crimp seals. It was originally not believed that the very low density polyethylene, or a blend containing the same, would provide a very effective heat seal bond between mating surfaces. It was believed that its best utility was as an intermediate layer between some substrate film and the primer for a conventional heat seal material; such as, an acrylic or a vinylidene chloride heat seal layer. It was discovered, however, that the very low density polyethylene layer, per se, or the same blended with another polyolefin would form a heat seal layer, with a like layer, having exceptional strength. This provided the advantage of making available to the art a much simpler and more inexpensive heat seal layer.

The contemplated very low density polyethylenes (VLDPE) have a density range less than 0.912 and, more specifically, from 0.890 to 0.912 g/cc. These materials are of low crystallinity and are produced in a low pressure process. For processing, melt temperatures of between 204° and 232°C (400° and 450°F) are recommended. Specific materials commercially available are DFDA-1137, having a density of 0.906 and a Melt Index of 0.8 g/10 minutes; and DFDA-1138, having a density of 0.900 and a melt index of 0.40 g/10 minutes. These materials are available from Union Carbide Corporation, Danbury, Ct. When the VLDPE is blended with, for example, polypropylene, to form the heat seal layer or layers on a base layer, it can be in the ratio of 2-100 wt.% VLDPE and 98-0 wt.% polypropylene. Heat seal layers of any combination of these two materials in the ranges stated will produce a heat seal significantly better than that of a polypropylene surface alone and better than many other heat seal systems.

In preparing the laminar structure of the present invention, polypropylene and the VLDPE or blends thereof can be coextruded so that the VLDPE or blend is from 2 to 12% of the thickness of the two extruded layers. As indicated above, the VLDPE containing layer can be on both surfaces of the core layer polyolefin, in which case the two VLDPE containing layers would be from 4 to 24% of the total thickness of the three layers. In preparing the coextruded film it has been found advantageous and convenient to recycle certain quantities of scrap extrudate back into the base homopolymer polyolefin, e.g. polypropylene. Thus, the homopolymer, polypropylene, can have from 0 to 25% of reclaimed material interblended therein. This recycled material can contain from 0 to 15% of the VLDPE or blends therein.

The laminar structure of the present invention can have an overall thickness within a wide range, but it is preferably from 0.012 up to 0. 044 mm (0.5 up to 1.75 × 10$^{-3}$ inch) in thickness. When the substrate is the homopolymer polypropylene it can have a film thickness of 0.025 mm (0.001 inch). In this instance, the associated coextruded VLDPE containing layer can be present in a thickness of from 0.0005 to 0.003 mm (0.02 to 0.12 × 10$^{-3}$ inch).

In the following examples, the base films are all biaxially oriented by conventional means. In general, this biaxial orientation is accomplished by stretching the coextruded system on a stretching apparatus manufactured by the T. M. Long Company. The apparatus essentially consists of an oven enclosing a rectangular stretching frame, the opposing sides of which can be caused to move apart while still retaining the rectangular configuration. Each side of the stretching frame is fitted with a plurality of pneumatically actuated pistons whose function is to grip the sample plaque around its perimeter thereby transmitting to the sample the force required to stretch it. In practice the sample is introduced into the stretching frame, gripped by the pneumatically actuated pistons, and heated to the desired temperature. It is then stretched to the desired extent and at the desired rate in either or both directions. The extent of orientation can be from 3 to 10 times its original dimension and then 3 to 10 times in a perpendicular direction to the first stretch.

It is also contemplated that the VLDPE containing layer can be applied to the polypropylene film after the polypropylene has been machine direction oriented. In this event, the VLDPE containing layer will only be transversely oriented while the polypropylene film will be biaxially oriented. The techniques of U.S. Patent Nos. 3,620,825 and 3, 671,383 can be employed. The following is an example of the effectiveness of the heat seal of a film within the scope of the present invention.

Example

The heat sealable film is a biaxially oriented coextruded homopolymer isotactic polypropylene core having surface layers of VLDPE on both sides thereof. The polypropylene was a material obtained from U.S. S. Corporation and identified as Nova 040R with a 4-5 melt flow. The very low density polyethylene was obtained from Union Carbide Corporation and is identified as DFDA 1138 0.4MI, having a density of 0.900 gm/cc. In testing the sealability of this material using 126°C (260°F)/formed Crimp Seals and 126° to 137°C (260 to 280°F)/formed ESM seals, the former failed at 410 g/inch and the later at 310 g/inch. The film structure was 0.02 mm (0.85 × 10$^{-3}$ inch) in thickness with the skin layers of VLDPE being approximately 0.0013 mm (0.05 × 10$^{-3}$ inch) each The orientation of the films was five times in the machine direction and seven times in the transverse direction.

The results of this example illustrate that the VLDPE containing heat sealed surface provides an excellent heat seal bond and the art is thereby provided with another effective heat seal surface for oriented films, such as polypropylene.

**Claims**

1. A laminar thermoplastic film comprising a substrate comprising a polyolefin layer having on at least one side thereof a layer comprising a very low density polyethylene or a blend of (I) a very low density polyethylene and (2) a polyolefin.

2. The film of claim 1 wherein the substrate is polypropylene.

3. The film of claim 2 wherein the very low density polyethylene or the blend is on one side of the substrate layer.

4. The film of claim 2 wherein the very low density polyethylene or blend thereof is on both sides of the substrate.

5. The film of any one of the preceding claims in a biaxially oriented state.

6. The film of any one of the preceding claims wherein the very low density polyethylene has a density of less than 0.912 g/cc.

7. The film of any one of the preceding claims wherein the very low density polyethylene has a density from 0.089 to 0.912 g/cc.